# EUROPEAN PATENT SPECIFICATION

(11) **EP 1 494 195 B1**
(45) Date of publication and mention of the grant of the patent: **06.02.2008**
(21) Application number: 03025302.5
(22) Date of filing: 03.11.2003
(51) Int. Cl.: G09B 21/00

(54) **A hand-held apparatus for semi-automatically inserting raster members into braille signs**
Tragbares Gerät zum semi-automatischen Einsetzen von Rasterelementen in Braille Schildern
Appareil portable d'insertion semi-automatique d'éléments de trame dans un panneau en braille

(30) Priority: 03.07.2003 US 613194
(43) Date of publication of application: 05.01.2005
(73) Proprietor: Accent Signage Systems, Inc., Minneapolis, MN 55405-1718 (US)
(72) Inventor: Rahamim, Reuven, MN 55416 (US); Birch, David, Minneapolis MN 55418 (US)
(74) Representative: Serjeants

(56) References cited:
- US-A1- 2003 022 137
- ACCENT SIGNAGE: "Raster(TM) Pen Instructions for use with Raster(TM) method of Braille for ADA compliant signage"[Online] 18 September 2002 (2002-09-18), pages 1-1, XP002354019 Retrieved from the Internet: URL:http://web.archive.org/web/20020918003 200/http://www.accentsignage.com/pages/ras terpeninstructions.html> [retrieved on 2005-11-14] -& GRAVOGRAPH: "Raster(TM) Pen Braille Dispenser/Inserter"[Online] 23 March 2004 (2004-03-23), pages 1-2, XP002354021 Retrieved from the Internet: URL:http://www.gravograph.com/usa/Signage/ Raster_Pen_flyer_gnh.pdf> [retrieved on 2005-11-14]
- ACCENT SIGNAGE: "Raster(TM) Pen for use with Raster(TM) method of Braille for ADA compliant signage"[Online] 17 September 2002 (2002-09-17), pages 1-1, XP002354020 Retrieved from the Internet: URL:http://web.archive.org/web/20020616090 113/http://www.accentsignage.com/pages/ras terpen1.html> [retrieved on 2005-11-14]

## Description

The present invention relates generally to a hand-held apparatus in the general shape of a pen for semi-automatically inserting protrusion members, both spherical and non-spherical, such as spheres and elongated cylindrical members with a rounded tip, respectively, into pre-drilled holes in a sign or identification product face to create raised elements of Braille characters on the sign or identification product face. The invention also relates to novel protrusion members to be inserted using such apparatus.

### BACKGROUND ART

Signs that direct people from place to place or identify locations or identification products sometimes have a message both in print, to be read by sighted people, and in Braille to be read by blind people. There has been a general trend toward putting Braille on such signs and identification products, but this trend has been greatly accelerated because of social awareness the needs of blind people. Indeed in the USA there is federal legislation requiring that Braille be placed on architectural signs, both new and old.

There is disclosed in Patent Numbers US-A-5,245,744 and US-A-5,403,189 a method and apparatus for placing spherically shaped members, known as protrusion members, into holes in sign faces to form Braille letters. Those patents, however, required a cumbersome manual pick-up and insertion of each protrusion member into a hole, which was time consuming, labor intensive and inefficient. Also, the manual pick-up was effective only for completely spherical protrusion members. The present invention provides apparatus which semi-automates that process, thereby allowing for increased productivity and savings of both time and labour cost. Also, the present invention provides apparatus which can be used with spherical or non-spherical protrusion members.

Accordingly, there is a need for an easy-to-use hand-held apparatus for applying Braille characters to a sign or identification product face that overcomes the aforementioned problems.

Documents XP 002354019 and XP 002354020 both disclose earlier versions developed by the applicant for hand-held apparatuses for inserting protrusion members into Braille signs.

### DISCLOSURE OF THE INVENTION

The present invention provides a hand-held apparatus for inserting protrusion members into pre-drilled holes in a sign or identification product face to create raised elements of Braille lettering on the sign or identification product face, as set out in claim 1 herein.

The previously known apparatus for inserting protrusion members into an array of pre-drilled holes in a sign or identification product face to create Braille characters has been confined to the use of totally spherical protrusion members. Because each protrusion member has to be received in the pre-drilled hole as a friction fit, it must be recessed into the hole by at least radial depth, and for a secure fit it is preferably buried in the hole for a depth in excess of the radius of the protrusion member. That means that the protruding part of the protrusion member cannot be more than the radius of the sphere, and is generally less than the radius. This is a severe disadvantage because it means that the ease with which a blind person can read the characters by touch is similarly limited. Using the apparatus of the invention, however, it is possible to present and insert protrusion members which are elongate, and using such protrusion members it is possible to create a Braille sign which has the individual protrusion members projecting from the sign or identification product face by more than the radius of their rounded ends.

### DRAWINGS

FIG. 1 is a cut-away side view of an apparatus constructed in accordance with the present invention;
FIG. 2 is an exploded view of the apparatus shown in FIG. 1;
FIG 3 is a vertical axial section through a nozzle portion of the apparatus shown in FIG. 1; and
FIG.4 is another vertical section through the nozzle portion of FIG. 1, but taken along the line **IV-IV** of FIG. 3.

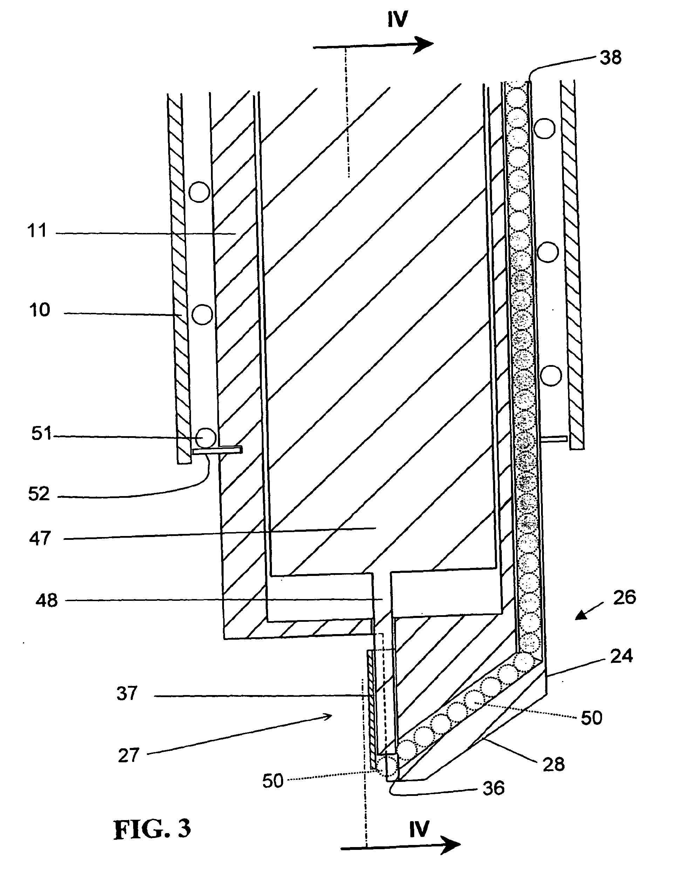

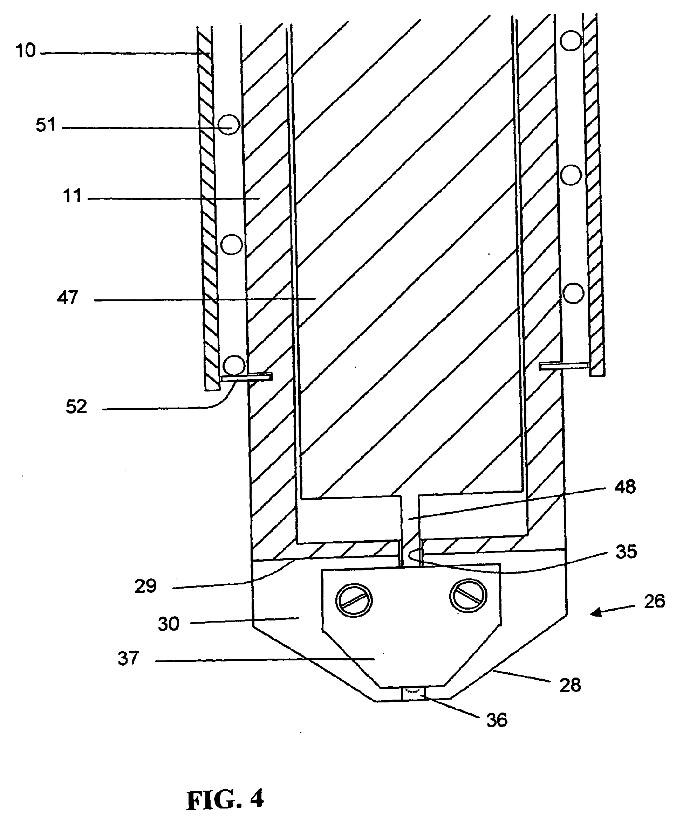

In the drawings the same reference numerals designate identical or corresponding parts throughout the several views. Figs 3 and 4 illustrate the technical operation of the device illustrated but are not to scale.

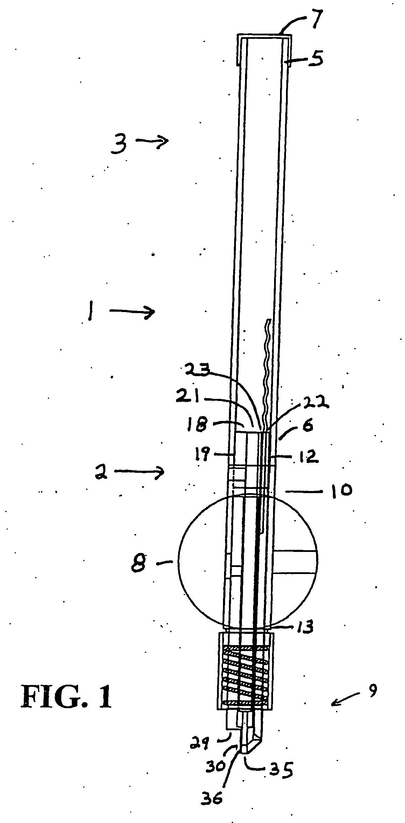

The apparatus shown in FIG. 1 includes a body 1 having a lower portion 2 and an upper portion 3, said upper portion 3 being comprised of a hollow cylindrical storage tube 4, said cylindrical storage tube 4 having an upper end 5 and a lower end 6, and a cap 7 over the upper end 5. The hollow cylindrical storage tube 4 acts as a storage reservoir for spherically or non-spherically shaped protrusion members such as ball bearing members or short cylindrical members with rounded ends. The protrusion members are preferably made out of acrylic material; however, other materials would work equally as well.

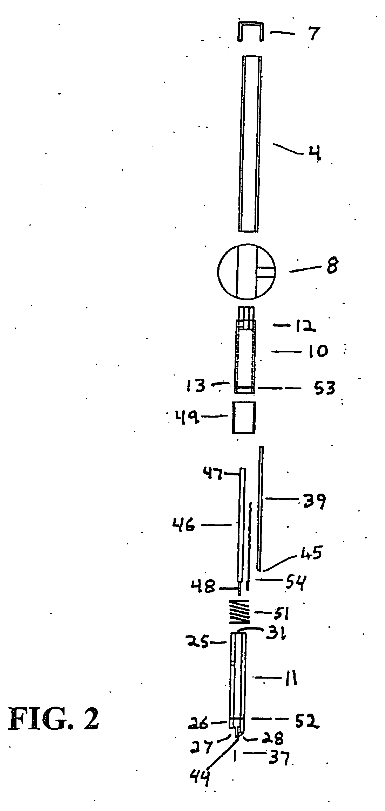

Referring first to FIG. 1, the lower portion 2 of the body 1 comprises a grip 8 and a tip assembly 9, the grip 8 being fixedly attached to and superimposed around the tip assembly 9. The tip assembly 9 comprises an outer tube 10 surrounding a protrusion member delivery device 11 (FIG. 2). The grip 8 is a spherical ball of acrylic material with an axial passageway formed therein the same diameter as the outer tube 10 and a side passageway which receives a grub screw (not shown) which secures the grip firmly to the outer tube 10. The outer tube 10 comprises a top end 12, a bottom end 13 and an apertured top face 18 across the top end 12. A mounting portion 19 at the top end 12 has an external diameter that is smaller than the external diameter of the remainder of the outer tube and substantially equal to the internal diameter of the cylindrical storage tube 4 which fits over the mounting portion 19 of the outer tube 10 of the tip assembly 9 and is affixed thereto for example with glue. The apertured top face 18, which has a centre hole 21, a wire receiving hole 22 and a delivery tube hole 23, is thus situated within the hollow cylindrical storage tube 4. The apertured top face 18 may also be bevelled from the centre hole 21 to the delivery tube hole 23 to facilitate movement of the protrusion members downwardly towards the delivery tube hole 23.

Referring now to FIGs. 2 to 4, the protrusion member delivery device 11 comprises a top portion 25 and a bottom delivery nozzle 26. The delivery nozzle 26 tapers inwardly at 28 towards its base. The protrusion member delivery device 11 has a stepped axial bore formed therein. A larger diameter bore portion extends from the top portion 25 to a level just above the delivery nozzle 26, and the bore continues as a smaller diameter bore portion 35 to the bottom of the delivery nozzle 26. A cut-away portion 27 is formed at the bottom end portion of the delivery nozzle 26. The cut-away portion 27 extends through almost one diametrical half of the delivery nozzle 26 nearly to the central axis of the nozzle, and upwardly for about twice the axial length of the inwardly tapering portion 28, thus creating a horizontal face 29 and a vertical face 30. The smaller diameter portion 35 of the stepped bore continues to the bottom of the nozzle 26 as a hemi-cylindrical groove 36 in the vertical face 30. A spring clip for presenting the protrusion members one at a time to a delivery location in the delivery nozzle 26 and holding them there until needed comprises a plate spring 37 is fixedly attached to the front face 30 by screws as shown in FIG. 4.

The protrusion member delivery device 11 has a groove 38 extending along its outer surface 24, and the groove 38 has a protrusion member delivery tube 39 located and fixedly attached therein. The protrusion member delivery tube 39 comprises an upper entry end and a lower exit end, the delivery tube 39 extending a sufficient height above the protrusion member delivery device 11 such that the entry end of the delivery tube 39 is seated immediately below or within the delivery tube hole 23 of the apertured top face 18 when the apparatus is at rest. The lower exit end of the protrusion member delivery tube 39 is cut at an angle to create an embrasure 45 which is aligned with an angled bore 44, which completes a pathway for the protrusion members to travel from the cylindrical storage tube 4 to the delivery nozzle 26, where they rest individually against the toe clip 37 at a delivery location at the axial centre of the nozzle 26. A line of protrusion members 50 passing along the tube 39 and then along the angled bore 44 is shown in FIG. 4, the leading protrusion member 50 being shown in the groove 36 but arrested and held in place by contact with the plate spring 37.

Referring still to FIGs. 2 to 4, a pressure pin 46 has a cylindrical upper portion 47 and a smaller diameter cylindrical lower portion 48. The upper portion 47 is slidably received in the larger diameter portion of the stepped bore in the protrusion member delivery device 11, and the lower portion 48 is slidable received in the smaller diameter portion 35 thereof, the entire pressure pin 46 being axially slidable within the protrusion member delivery device 11. The pressure pin 46 is fixedly attached to the outer tube 10, thereby moving up and down in concert with the outer tube 10 relative to the protrusion member delivery device 11.

A sleeve 49 is fixedly secured closely around the bottom end 13 of the outer tube 10. A spring 51 is disposed around the protrusion member delivery device 11 and is in compression between a stop means on the protrusion member delivery device 11, such as a circlip 52 positioned within an annular groove about the protrusion member delivery device 11, and a stop means on the outer tube 10, such as a circlip 53 positioned within an annular groove within the outer tube 10. The spring 51 thereby acts as a compression spring biasing the pressure pin 46 upwardly within the protrusion member delivery device 11.

A wire 54 is secured at its lower end to the protrusion member delivery device 11 and passes through the wire guide hole 22 into the cylindrical storage tube 4, thereby contacting the protrusion members. The upper portion of the wire 54 is formed into a sinuous shape, so that movement of the outer tube 10 relative to the protrusion member delivery device 11 causes side-to-side movement of the wire 54 as it passes through the wire guide hole 22. This creates additional movement to the protrusion members, thereby facilitating their movement downward into the delivery hole 23.

In operation, in order to practice the invention: as the operator holds the apparatus, the protrusion members 50 held in the hollow cylindrical storage tube 4 sequentially drop into the delivery hole 23 of the apertured top face 18 and travel down the delivery tube 39, the downward motion aided by gravity and the wire 54, and each protrusion member 50 then continues to travel through the delivery tube 39 to the angled bore 44 and continues down the angled bore 44 until the leading protrusion member 50 is stopped by contacting the plate spring 37. Downward movement of the apparatus by the operator causes the nozzle 26 to contact the sign or identification product face, thereby arresting further downward movement of the nozzle 26. On further movement of the grip 8 towards the sign or identification product face, the outer tube 10 is moved with compression of the spring 51 and the pressure pin 46 slides within the nozzle 26. The protrusion member 50 presented axially beneath the pin 46 and held by the plate spring 37 is pressed free of the plate spring 37 and into the hole on the sign or identification product face by the pressure pin 46 as the apparatus continues its downward movement. The pressure pin 46 acts as a valve to prevent the next or subsequent member from exiting the angled bore 44 until the spring 51 raises the pin to its starting level, as can clearly be seen in FIG 3.

The preferred sizes and proportions of the individual components of the apparatus will depend on the size and shape of the protrusion members with which it is to be used.

## Claims

1. A hand-held apparatus for inserting protrusion members led into pre-dril holes in a sign or identification product face to create raised elements of Braille lettering on the sign or identification product face, **characterized in that** the apparatus comprises:
a delivery means (23,54) for delivering the protrusion members from the storage reservoir (4), down a delivery channel (39) to a delivery nozzle (26);
presentation means (44) including a spring clip (37) for presenting the protrusion members one at a time to a delivery location in the delivery nozzle (26;
an axial pressure pin (46) aligned with the delivery location; and
means (8) for depressing the axial pressure pin (46) relative to the delivery nozzle (26) to push the protrusion members one at a time from the delivery location in the delivery nozzle (26) past the spring clip (37) and to press them into the pre-drilled holes.

2. Apparatus according to claim 1, wherein the delivery conduit (39) is an open-ended tube lying alongside the axial pressure pin (46).

3. Apparatus according to claim 2, wherein the delivery conduit is a tube extending from the storage reservoir (4) down a channel formed in the outside of the delivery nozzle (26) to a conduit passing through a wall of the delivery nozzle (26), the conduit forming the presentation means (44).

4. Apparatus according to any preceding claim, wherein the means (8) for depressing the axial pressure pin (46) relative to the delivery nozzle (26) comprises a grip member (8) secured to the outside of an outer tube (10) surrounding the delivery nozzle (26) and slidable relative thereto, the outer tube (10) being secured through the wall of the delivery nozzle (26) to the axial pressure pin (46) so that movement of the grip member (8) relative to the delivery nozzle (26) on the outside of the delivery nozzle causes corresponding relative movement of the axial pressure pin (46) relative to the delivery nozzle (26) on the inside of the delivery nozzle.

5. Apparatus according to claim 4, wherein the outer tube (10) is spring-biased relative to the delivery nozzle (26) in a direction to raise the axial pressure pin (46) relative to the delivery nozzle (26).

6. Apparatus according to any preceding claim, wherein a wire (54) extends from the axial pressure pin (46) upwardly into the storage reservoir (4) for disturbing the protrusion members contained therein when the axial pressure pin (46) is depressed relative to the delivery nozzle (26).

7. Apparatus according to claim 6, wherein the wire (54) is formed into a sinuous shape and passes through a narrow opening into the storage reservoir (4) so that longitudinal movement of the wire (54) into the storage reservoir (4) is accompanied by a lateral movement from side to side of the wire (54) within the storage reservoir (4).

## Patentansprüche

1. Tragbares Gerät zum Einsetzen von Vorsprungskörpern aus einem Aufbewahrungsbehälter (4) in vorgebohrte Löcher in der Oberfläche eines Schildes oder eines Kennzeichnungsproduktes zur Erzeugung erhabener Elemente in Braille-Schrift auf der Oberfläche des Schildes oder Kennzeichnungsproduktes, **dadurch gekennzeichnet, dass** das Gerät Folgendes umfasst:
- eine Abgabeeinrichtung (23, 54) zur Abgabe der Vorsprungskörper aus dem Aufbewahrungsbehälter (4) entlang eines Abgabekanals (39) an ein Abgabemundstück (26);
- eine Darreichungseinrichtung (44), die einen Federclip beinhaltet, um die Vorsprungskörper, Einen nach dem Anderen, einer Abgabestelle im Abgabemundstück (26) darzureichen;
- einen axialen Druckstift (46), der auf die Abgabestelle ausgerichtet ist; und
- eine Einrichtung (8) zum Niederdrücken des axialen Druckstifts (46) bezüglich des Abgabemundstücks (26), um die Vorsprungskörper, Einen nach dem Anderen, von der Abgabestelle im Abgabemundstück (26) an dem Federclip (37) vorbei zu schieben und sie in die vorgebohrten Löcher zu drücken.

2. Gerät nach Anspruch 1, wobei der Abgabegang (39) ein offenendiges Rohr ist, welches neben dem axialen Druckstift (46) liegt.

3. Gerät nach Anspruch 1, wobei der Abgabegang ein Rohr ist, welches sich vom Aufbewahrungsbehälter (4) entlang eines in der Außenseite des Abgabemundstücks (26) geformten Kanals bis zu einem Gang erstreckt, der durch eine Wand des Abgabemundstücks (26) führt, wobei der Gang die Darreichungseinrichtung (44) bildet.

4. Gerät nach einem der vorangehenden Ansprüche, wobei die Einrichtung (8) zum Niederdrücken des axialen Druckstifts (46) bezüglich des Abgabemundstücks (26) ein Greifglied (8) umfasst, das an einer Außenseite eines äußeren Rohrs (10) befestigt ist, welches das Abgabemundstück (26) einfasst und verschiebbar dazu angeordneten ist, wobei das äußere Rohr (10) durch die Wand des Abgabemundstücks (26) an dem axialen Druckstift (46) derart befestigt ist, dass eine Bewegung des Greifglieds (8) bezüglich des Abgabemundstücks (26) auf der Außenseite des Abgabemundstücks eine korrespondierende Relativbewegung des axialen Druckstifts (46) bezüglich des Abgabemundstücks (26) auf der Innenseite des Abgabemundstücks (26) hervorruft.

5. Gerät nach Anspruch 4, wobei das äußere Rohr (10) bezüglich des Abgabemundstücks (26) von einer Feder in einer solchen Richtung bezüglich des Abgabemundstücks (26) vorgespannt ist, dass der axiale Druckstift (46) bezüglich des Abgabemundstücks (26) angehoben wird.

6. Gerät nach einem der vorangehenden Ansprüche, wobei sich ein Draht (54) von dem axialen Druckstift (46) aufwärts in den Aufbewahrungsbehälter (4) erstreckt, um die darin enthaltenen Vorsprungskörper aufzurütteln, wenn der axiale Druckstift (46) bezüglich des Abgabemundstücks (26) niedergedrückt wird.

7. Gerät nach Anspruch 6, wobei der Draht (54) gewendelt geformt ist und durch eine schmale Öffnung in den Aufbewahrungsbehälter (4) eintritt, so dass eine längsgerichtete Bewegung des Drahtes (54) in den Aufbewahrungsbehälter (4) hinein von einer lateralen Bewegung des Drahtes (54) innerhalb des Aufbewahrungsbehälters (4) von einer Seite zur anderen begleitet ist.

## Revendications

1. Appareil portable pour l'insertion d'éléments en saillie à partir d'un réservoir de stockage (4) dans des trous prépercés dans une face de produit de signalisation ou d'identification pour créer des éléments en relief de lettres Braille sur la face de produit de signalisation ou d'identification, **caractérisé en ce que** l'appareil comprend :
des moyens de distribution (23, 54) pour distribuer les éléments en saillie à partir du réservoir de stockage (4), en descendant par un canal de distribution (39) jusqu'à une buse de distribution (26) ;
des moyens de présentation (44) comprenant une pince ressort (37) pour présenter les éléments en saillie un par un, à un emplacement de distribution dans la buse de distribution (26) ;
une broche de pression axiale (46) alignée avec l'emplacement de distribution ; et
des moyens (8) pour enfoncer la broche de pression axiale (46) par rapport à la buse de distribution (26) afin de pousser les éléments en saillie un par un à partir de l'emplacement de distribution dans la buse de distribution (26) au-delà de la pince ressort (37) et pour les enfoncer dans les trous prépercés.

2. Appareil selon la revendication 1, dans lequel le conduit de distribution (39) est un tube à extrémité ouverte se trouvant le long de la broche de pression axiale (46).

3. Appareil selon la revendication 2, dans lequel le conduit de distribution est un tube s'étendant à partir du réservoir de stockage (4) descendant dans un canal formé à l'extérieur de la buse de distribution (26) vers un conduit passant par une paroi de la buse de distribution (26), le conduit formant les moyens de présentation (44).

4. Appareil selon l'une quelconque des revendications précédentes, dans lequel les moyens (8) pour enfoncer la broche de pression axiale (46) par rapport à la buse de distribution (26) comprennent un élément de préhension (8) fixé sur l'extérieur d'un tube externe (10) entourant la buse de distribution (26) et pouvant coulisser par rapport à celle-ci, le tube externe (10) étant fixé à travers la paroi de la buse de distribution (26) jusqu'à la broche de pression axiale (46) de sorte que le mouvement de l'élément de préhension (8) par rapport à la buse de distribution (26) à l'extérieur de la buse de distribution provoque un mouvement relatif correspondant de la broche de pression axiale (46) par rapport à la buse de distribution (26) à l'intérieur de la buse de distribution.

5. Appareil selon la revendication 4, dans lequel le tube externe (10) est sollicité par ressort par rapport à la buse de distribution (26) dans une direction pour soulever la broche de pression axiale (46) par rapport à la buse de distribution (26).

6. Appareil selon l'une quelconque des revendications précédentes, dans lequel un fil (54) s'étend à partir de la broche de pression axiale (46) vers le haut dans le réservoir de stockage (4) pour distribuer les éléments en saillie contenus à l'intérieur lorsque la broche de pression axiale (46) est enfoncée par rapport à la buse de distribution (26).

7. Appareil selon la revendication 6, dans lequel le fil (54) est formé selon une forme sinueuse et passe à travers une ouverture étroite dans le réservoir de stockage (4) de sorte que le mouvement longitudinal du fil (54) dans le réservoir de stockage (4) est accompagné par un mouvement latéral d'un côté à l'autre du fil (54) dans le réservoir de stockage (4).
